# EUROPEAN PATENT APPLICATION

(11) **EP 1 632 910 A1**
(43) Date of publication of application: **08.03.2006**
(21) Application number: 05254843.5
(22) Date of filing: 03.08.2005
(51) Int. Cl.: G07F 7/02, H04M 17/00

(54) **Phonecard system**

(30) Priority: 01.09.2004 GB 0419412
(71) Applicant: Cheers International Telecom Ltd, London W6 0LH (GB)
(72) Inventor: Samaratne, Miles, London W6 7QD (GB)
(74) Representative: Slingsby, Philip Roy

(57) **Abstract**

A communication system comprising a plurality of cards, a communications network and a call provision unit, each card bearing a first access code and a second access code, wherein the network is arranged to, in response to a call being initiated by the first access code being entered into a communications device, connect the communication device to the call provision unit and charge the initiator of the call at a relatively low charging rate, the call provision unit being arranged to decrement a prepaid balance by the charge for the call in response to a security code determined by the network to be valid being entered into the communications unit and the network is arranged to, in response to a call being initiated by the second access code being entered into a communications device, connect the communication device to the call provision unit and charge the initiator of the call at a relatively high charging rate.

## Description

This invention relates to a system that enables a user to make telephone calls by dialling an access number printed on a phonecard. In particular, the system provides the user with at least two access numbers, thereby enabling the user to make telephone calls that will be charged to a telephone bill by dialling one access number and to make calls for which the charge will be deducted from a pre-paid account by dialling a second access number.

The cost of making a telephone call typically depends on the length of the call, the distance between the initiating and receiving parties and the time of day at which the call is made. Usually, the charging rate is mainly determined by the distance between the initiating and receiving parties. The call may be categorised according to e.g. whether it is a local call, a national call or an international call. International calls are typically subdivided into different countries, so that e.g. the telecommunications operator may charge more for a call made from the UK to China than one made from the UK to the USA. The charging rate may further depend on the time of day, e.g. with a different charging rate being imposed for a call made during peak times when demand is at its highest (usually during business hours) than the same call made during off-peak hours (for example, during the evening).

Charging for telephone calls may be implemented in different ways. For example, a user of a fixed line or mobile phone may be sent a bill every month. Alternatively, users may pre-pay for telephone calls, thereby creating a credit balance they can use to make calls. Telephone calls may also be made from public call boxes by paying upfront via either cash or credit card.

Most telephone calls are placed directly with the telephone operator. However, one option is for the user to place a call to a destination number via a service provider by dialling an access number before the destination number. The access number connects the user to a call provision unit associated with the service provider and then the call provision unit connects the user to a destination number entered by the user.

Usually, the service provider charges a lower charging rate for the call to the destination number than would be charged by a normal telecommunications operator. This is because, typically, the service provider has some kind of arrangement with a telecommunications operator whereby the card issuer makes a "bulk purchase" of discounted call time using the telecommunications operator's infrastructure. The service provider then sells this call time onto customers at a lower rate than would typically be charged by the telephone operator. As the service provider buys the call time with a substantial discount, they are usually able to undercut the telephone operator whilst still making a profit.

The service provider may sell the call time it has purchased from the telephone operator to customers in a number of ways. One of commonly used method is by producing phonecards. These typically have printed on them a list of calling charges for destinations worldwide and an access number, which a customer dials to initiate a call at the charge specified.

Phonecards may be provided to customers either free of charge, or for payment. If the card is free, then the cost of any calls made via the access number printed on the card is usually charged on the telephone bill of the phone with which the calls were made. If a call is made using a public payphone, then payment for the call must be made at the phone as normal e.g. using cash or credit cards. If the customer pays for the phonecard, then that payment may create a credit balance that the customer can use to make calls. Alternatively, paying for the phonecard may simply entitle the customer to make calls at a cheaper rate than that charged for calls accessed using the access number of a phonecard that is free.

If a customer buys a phonecard, thereby creating a pre-paid balance for making calls, then the cost of any calls placed by dialling the access number printed on the card are deducted from that pre-paid balance. This can lead to a situation in which a user needs to make a telephone call, but is unable to take advantage of the services offered by the service provider because their pre-paid balance has been used up and so reduced to zero. In this situation, the user would have to buy another phonecard to access the services offered by the service provider. This may be inconvenient, particularly if the user needs to make an urgent phone call. Therefore, there is a need for a system whereby a user is enabled to access the services provided by a service provider irrespective of the amount of their pre-paid balance remaining.

According to one embodiment of the present invention, there is provided a communication system comprising a plurality of cards, a communications network and a call provision unit, each card bearing a first access code and a second access code, wherein the network is arranged to, in response to a call being initiated by the first access code being entered into a communications device, connect the communication device to the call provision unit and charge the initiator of the call at a relatively low charging rate, the call provision unit being arranged to decrement a pre-paid balance by the charge for the call in response to a security code determined by the network to be valid being entered into the communications unit and the network is arranged to, in response to a call being initiated by the second access code being entered into a communications device, connect the communication device to the call provision unit and charge the initiator of the call at a relatively high charging rate.

Preferably, in response to a destination code being entered into a communications device connected to the call provision unit, the call provision unit is arranged to establish a connection between the communications device and a further communications device associated with the destination code.

In response to a call being initiated by the second access code being entered into the communications device, the call provision unit may be arranged to establish a connection between the communications device and the further communications device associated with the destination code, irrespective of whether a security code entered into the communications device is determined by the network to be valid.

Alternatively, in response to a call being initiated by the first access code being entered into the communications device, the call provision unit may be arranged to establish a connection between the communications device and the further communications device associated with the destination code only after a security code is entered into the communications device and determined by the network to be valid. The call provision unit may be arranged to establish a connection between the communications device and the further communications device associated with the destination code if the pre-paid balance is greater than zero.

Preferably, the call provision unit stores at least one list of valid security codes and is arranged to find a security code valid if it is stored on at least one of the lists of valid security codes. The call provision unit may store a list of valid security codes for each of the first access code and the second access code and may be arranged to find a security code valid if it is stored on the list of valid security codes for whichever of the access numbers was entered to initiate the call.

Each card may bear a security code.

Preferably the call provision unit stores a pre-paid balance in association with each valid security code. In response to the first access code and a valid security code being entered into the communications device the call provision unit is preferably arranged to check that the pre-paid balance associated with that valid security code is greater than zero. The call provision unit may be arranged to decrement the pre-paid balance by a charge for a call after the termination of the call. The call provision unit may be arranged to decrement the pre-paid balance by an ongoing charge for the call at intervals during the call.

The call provision unit may be arranged to generate an audible warning to the user of the first communications device when the pre-paid balance is reduced below a predetermined threshold. The call provision unit may be arranged to terminate the call when the pre-paid balance is reduced to zero.

In response to a predetermined code being entered into the communications device after a call is initiated by the first access code being entered into the communications device, the network is preferably arranged to charge the initiator of a call at the high charging rate.

The present invention will now be described by way of example, with reference to the accompanying drawings, in which:
Figure 1 shows a telecommunications system suitable for implementing the present invention;
Figure 2 shows the steps involved in implementing the present invention;
Figure 3 shows the instructions that may be printed on a phonecard in accordance with an embodiment of the present invention;
Figure 4 shows the instructions that may be printed on a phonecard in accordance with another embodiment of the present invention.

The present invention relates to telephone services that can be accessed by dialling an "access" phone number. By dialling the access number, a user is connected to a call provision unit associated with a service provider. The user is then invited to enter a destination number for a call. The call provision unit connects the user to that destination number.

The access numbers that may be dialled to access the service provider's call provision unit can be charged at different rates. For example, by dialling a particular access number the call may be charged at free, local, national or premium rate. The charging rate may also be determined by a combination of the dialled access number and a PIN number entered by the user.

The call provision unit may be located at a single station or distributed between multiple locations.

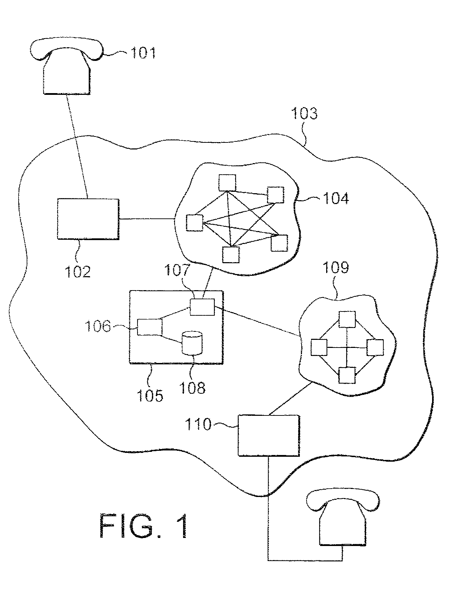

A suitable telecommunications system for implementing this kind of arrangement is illustrated in figure 1. Figure 1 illustrates an initiating telephone 101. When the user dials the access number for the call provision unit 105, the call is connected to the local exchange 102 where a connection is made to a network 104. The call is routed via a series of switches in the network 104 to the call provision unit 105. The user then enters the destination number and the call provision unit routes the call to the local exchange 110 of the destination telephone via the network 109.

Networks 104 and 105 are shown as different networks for the purposes of example only. The networks may be wireless or wired, and could be e.g. a conventional telephone network or the internet.

The call provision unit 105 typically comprises a controller 106, a router 107 and a database 108. In figure 1 these functional units have been illustrated as separate components. However, this is for the purposes of example only and the functions could be performed by a single piece of apparatus. The router connects the call provision unit to at least one communications network and the database stores information such as access and PIN numbers. The controller controls the operation of the call provision unit. For example, the controller prompts the user to enter the PIN and destination numbers for the call and checks the database to check whether or not the PIN is valid for the access number which the user dialled.

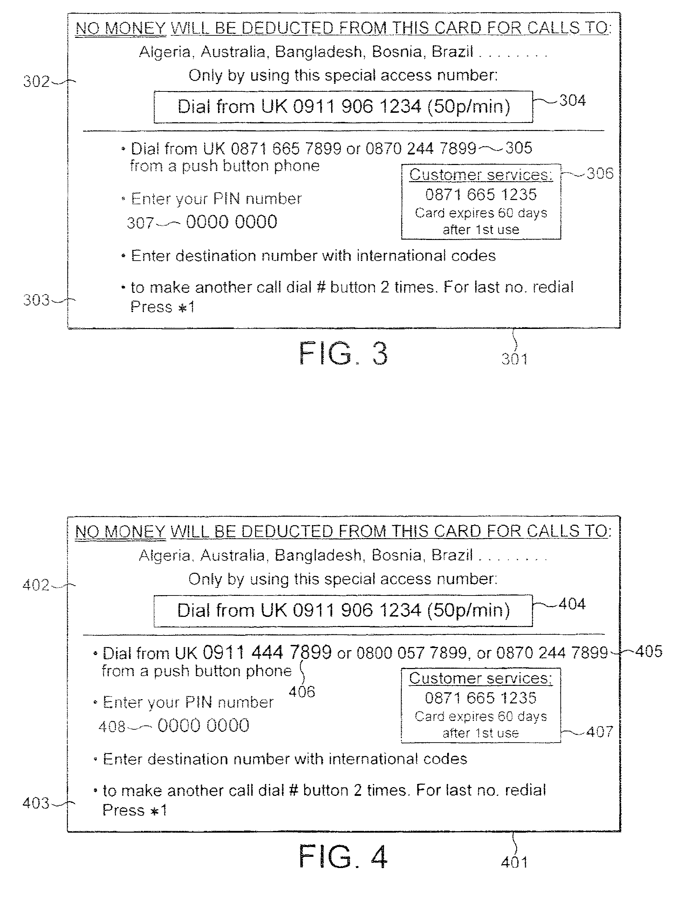

The service provider may enable customers to create a pre-paid balance for making calls by buying phonecards. These typically have printed on them a list of calling charges for destinations worldwide and an access number, which a customer dials to initiate a call at the charge specified. Examples of suitable phonecards are shown in figures 3 and 4.

Although the present invention is described principally in relation to phonecards, it should be understood this is for the purposes of example only. Phonecards are just one commonly used and convenient method for enabling users to set up a pre-paid balance with a service provider and for providing them with the information required to access the services of that service provider.

The phonecard may provide a customer with a number of different access numbers. For example, the phonecard (301) illustrated in figure 3, provides the user with several different access numbers (304, 305). The different access numbers determine the charging method and charging rate to be applied to a call initiated by dialling a particular access number. The phonecard provides the user with a list of instructions to follow when making a call. Typically, the instructions may be divided into two sets; a first set instructing the user how to make calls without the charge being deducted from the user's pre-paid balance (302) and a second set instructing the user how to make calls with the charge being deducted from the user's pre-paid balance (303). The different sets of instructions may be printed on the card in any suitable arrangement. However, in a preferred embodiment, the first instruction set (whereby calls are made without the charge being deducted from the user's pre-paid balance) is presented first.

For example, in figure 3 the first set of user instructions (302) provides a billing access number (304) that allows the user to access the call provision unit and make calls to a destination number without the charge for the call being deducted from their pre-paid account. Instead, the charge for the call is added to the telephone bill of the telephone used to make the call. Typically, this access number would be charged at a premium rate. The instruction may also contain a list of countries that may be called by dialling the given access number. The second set of user instructions (303) provides the user with further access numbers (305), which may be dialled to place calls that are charged to the user's pre-paid balance. These access numbers would typically be charged at local or national rates.

The second set of instructions (303) may also instruct the user to enter a PIN number (307) before dialling the destination number. As illustrated in figure 3, the PIN number may be printed on the phonecard. Alternatively, the PIN card may be provided to the user separately, for security purposes, or may be chosen for the user. For example, the call provision unit may provide the user with the option to amend their PIN number after they have accessed their account successfully using a PIN number allocated by the service provider and printed on their phonecard.

Typically, the PIN number identifies a particular user so that the charges for any calls can be deducted from their particular pre-paid balance. The PIN number may also be an authorisation device, to ensure that the person making the call is authorised to access the pre-paid balance associated with the card. If the user fails to enter a valid PIN number the call may be terminated by the server of the card issuer. PIN numbers could, for example, be valid only for a predetermined length of time, e.g. every phonecard could expire by default after 360 days. The expiry period could run from the date when the type of phonecard is first marketed, from the date when a particular card is first issued to a customer or from the date when the first phone call is made using the access number printed on the phonecard. For example, in figure 3 the phonecard states that the card expires 60 days after first use (306).

The user may be allowed to re-enter their PIN number a predetermined number of times before the call is terminated.

The PIN number may also identify a particular phonecard or a particular type of service that can be accessed using a phonecard. For example, different phonecards can be sold that provide different services/charging rates but which provide access to those services/charging rates via the same access phone number. This enables the card issuer to provide a wide variety of products to their customers without having to obtain a different access number from the telecommunications operator for each product on the market. The PIN number entered by the user can also be a factor in determining the charging rate that is to be applied to a call. For example, some phonecards may be directed at a particular market, for example, calls to a particular country or region of the world may be available at a particularly discounted rate.

A further example of a phonecard is illustrated in figure 4. In this example the second set of instructions (403) provides a billing access number (406) that enables the user to make calls without the charge being deducted from their pre-paid balance, in addition to an access number for which the charge will be deducted from the pre-paid balance (405). The billing access number is typically charged at a premium rate. The user will still be required to enter the PIN number (408), as for the other access numbers listed in the second set of instructions. However, as this particular access number does not involve deducting a charge from a pre-paid balance for any calls made, the system may permit an onward call to be made to a destination number even if no PIN number has been entered. In that situation if the user has not entered a correct PIN number after a certain number of attempts, or if the user fails to enter a PIN number at all, the user may be still be able to make the onward call. Including the billing access number (406) in the second set of instructions means that the user is able to access the call provision unit in accordance with the access method the user is already accustomed to, i.e. dialling an access number and then entering a PIN number, while still being able to make calls which will not be charged to their pre-paid balance.

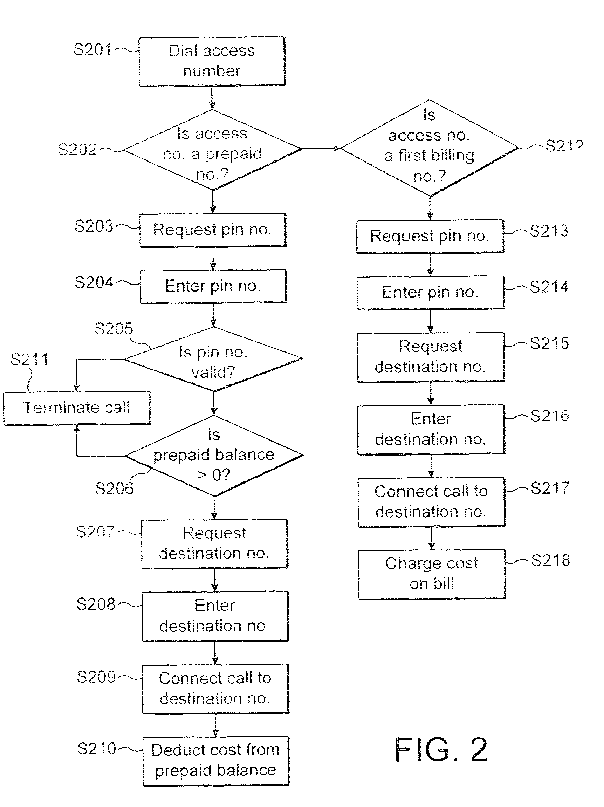

A suitable method for placing and charging calls according to an access number is illustrated in figure 2. According to this implementation, in step S201 the user dials an access number. As described above, the call is connected to the call provision unit. The controller of the call provision unit checks the category of the access number that was dialled in step S202, in order to determine which service should be applied to the call. In step S202 the call provision unit determines whether the access number is a pre-paid access number. If so, the call provision unit requests the user's PIN number at step S203. The user may hear a voice prompting them to enter a PIN number. Alternatively, the phonecard may contain instructions to the user to enter the PIN number without a voice prompt, for instance immediately after the access number is dialled or when a particular tone is heard through the telephone. The user enters the PIN number at step S204.

The call provision unit checks the PIN number at step S205. The step of checking the PIN number will involve checking a database of PIN numbers, to verify that the PIN number that has been entered is valid for the access phone number that was dialled. If the PIN number is invalid, then the call may be terminated. Alternatively, the user may be invited to re-enter the PIN number. The user may be limited to entering the PIN number a predetermined number of times before the call is terminated or the number of times the user may re-enter the PIN may be unlimited.

Preferably the call provision unit has access to a list of PIN numbers that have been allocated. For example, when phonecards are issued having particular access numbers, the PIN numbers printed on the phonecards are added to the list of valid PIN numbers, preferably in association with the access numbers for which they are valid. For example, the call provision unit may have different lists of allocated, valid PIN numbers for each access number. PIN numbers may be valid for one or more access numbers. When the user dials the access number for the call provision unit and enters a PIN number, the call provision unit checks the list of valid PIN numbers for that access number.

Preferably, each PIN number associated with a pre-paid access number is also associated with a pre-paid balance. The balance with which a PIN number is associated may be stored together with the PIN number in the list of valid PIN numbers, or alternatively stored in a different location, with the entry for that PIN number in the list of valid PIN numbers containing a reference to that location.

PIN numbers may be valid for only a predetermined length of time. For example, in the phonecards illustrated in figures 3 and 4, the card expires 60 days after first use. Therefore, some PIN numbers may be deleted from the valid list a predetermined time after the number is first entered by a user. This method of allocating PIN numbers means that the service provider can re-use PIN numbers when printing phonecards, as only a limited number will be allocated and therefore valid at any one time.

If the PIN number is found to be valid, then at step S206 the call provision unit checks the pre-paid balance associated with the PIN number. If the balance is above zero, then the user is prompted to enter the destination number at step S207. The destination number is entered at step S208 and at step S209 the call provision unit connects the call to the destination number. The costs for the call are deducted from the pre-paid balance associated with the PIN number (step S210). The new balance at the end of the call is stored in association with the PIN number that was entered at the commencement of the call. The costs of the call may be determined and deducted from the pre-paid balance at the end of the call, at predetermined time intervals during the call (e.g. every five seconds) or in an ongoing manner throughout the call.

If the PIN number is found to be invalid, then at step S211 the call is terminated. Alternatively, the user may be invited to re-enter the PIN number. The PIN number might be re-entered an unlimited number of times or might be restricted to being entered limited number of times before the call is terminated. The call provision unit may invite the user to initiate the call using the billing access number if they enter an invalid PIN number. The call provision unit may invite the user to dial a predetermined code (e.g. *8) to continue placing their call via the call provision unit at a charging rate associated with a billing access number.

The call provision unit may monitor the ongoing costs associated with the call and deduct these from the pre-paid credit balance. If the balance drops below a predetermined amount then the call provision unit may interrupt the call to the destination number to warn the user that their balance will shortly be reduced to zero. When the balance is reduced to zero, the call provision unit will terminate the call. Alternatively, the call provision unit may monitor the ongoing costs associated with the call and compare these with the pre-paid balance. When the costs come within a predetermined amount of the balance, the call may be interrupted as before, and when the costs equal or exceed the balance, the call may be terminated. The call provision unit may terminate both connections in such a situation i.e. the connection between the initiating telephone and the destination number and the connection between the initiating telephone and the call provision unit. Alternatively, the call provision unit may briefly retain the connection between itself and the initiating telephone, in order that it may remind the user that they may continue to make calls using the other access number printed on their phonecard.

The call provision unit determines the charging rate to be applied to a call according to the access number and/or PIN number entered by the user. The call provision unit may then monitor the ongoing costs associated with a call by measuring the ongoing duration of the call and multiplying this by the appropriate charging rate.

The call provision unit may offer the user the option to continue with their existing call, or to make new calls, the charge for the call being charged to their telephone bill or entered into a payphone via cash or credit card, without having to disconnect and redial. The user may be invited to dial a code (e.g. *8) to signal their acceptance of the offer. Any calls made during that connection will typically be charged at a higher rate than was charged for the calls initiated by dialling the pre-paid access number.

If at step S202 of figure 2, the access number entered is determined to be a billing access number, then the call provision unit determines whether the billing access number is of a first type or a second type in step S212. If the billing access number is of a first type, then the user is not prompted to enter a PIN number and the method proceeds to step S215. If the billing access number is of a second type, then the user is prompted to enter a PIN number in step S213. Usually, the step of entering a PIN number (step S214) in respect of a billing access number is for user reassurance purposes only (since the user is accustomed to entering a PIN number) and the method will proceed to step S215 irrespective of whether the PIN number is valid or entered at all.

In step S215 the user is prompted to enter a destination number, which is entered at step S216 and in step S217 the user is connected to that destination number. The cost of the call is charged to the bill of the telephone from which the call is made (step S218), or required to be entered into a public payphone via cash or credit card.

The system described above therefore enables a customer to place calls with a service provider irrespective of their pre-paid balance by using appropriate access information printed on a phonecard.

For regulatory reasons, calls made using the billing access number may be automatically terminated after a predetermined length of time, such as four hours.

The services provided by the service provider need not be limited to placing calls to a destination number. For example, the service provider may provide services such as horoscopes, psychic hotlines, sports information, weather reports or virtual chat to users accessing the call provision unit. The access number for accessing these services would be contained in a third set of user instructions printed on a phonecard. Typically, the access number for accessing these services would be a billing access number. Typically, the billing access number would be a premium rate number.

The applicant hereby discloses in isolation each individual feature described herein and any combination of two or more such features, to the extent that such features or combinations are capable of being carried out based on the present specification as a whole in light of the common general knowledge of a person skilled in the art, irrespective of whether such features or combinations of features solve any problems disclosed herein, and without limitation to the scope of the claims. The applicant indicates that aspects of the present invention may consist of any such feature or combination of features. In view of the foregoing description it will be evident to a person skilled in the art that various modifications may be made within the scope of the invention.

## Claims

1. A communication system comprising a plurality of cards, a communications network and a call provision unit, each card bearing a first access code and a second access code, wherein:
the network is arranged to, in response to a call being initiated by the first access code being entered into a communications device, connect the communication device to the call provision unit and charge the initiator of the call at a relatively low charging rate, the call provision unit being arranged to decrement a pre-paid balance by the charge for the call in response to a security code determined by the network to be valid being entered into the communications unit; and
the network is arranged to, in response to a call being initiated by the second access code being entered into a communications device, connect the communication device to the call provision unit and charge the initiator of the call at a relatively high charging rate.

2. A communication system as claimed in claim 1, wherein in response to a destination code being entered into a communications device connected to the call provision unit, the call provision unit is arranged to establish a connection between the communications device and a further communications device associated with the destination code.

3. A communication system as claimed in claim 2, wherein in response to a call being initiated by the second access code being entered into the communications device, the call provision unit is arranged to establish a connection between the communications device and the further communications device associated with the destination code, irrespective of whether a security code entered into the communications device is determined by the network to be valid.

4. A communication system as claimed claim 2, wherein in response to a call being initiated by the first access code being entered into the communications device, the call provision unit is arranged to establish a connection between the communications device and the further communications device associated with the destination code only after a security code is entered into the communications device and determined by the network to be valid.

5. A communication system as claimed in claims 2 or 4, wherein in response to a call being initiated by the first access code being entered into the communications device, the call provision unit is arranged to establish a connection between the communications device and the further communications device associated with the destination code if the pre-paid balance is greater than zero.

6. A communication system as claimed in any preceding claim, wherein the call provision unit stores at least one list of valid security codes and is arranged to find a security code valid if it is stored on at least one of the lists of valid security codes.

7. A communication system as claimed in claim 6, wherein the call provision unit stores a list of valid security codes for each of the first access code and the second access code and is arranged to find a security code valid if it is stored on the list of valid security codes for whichever of the access numbers was entered to initiate the call.

8. A communication system as claimed in any preceding claim, wherein each card bears a security code.

9. A communication system as claimed in any preceding claim, wherein the call provision unit stores a pre-paid balance in association with each valid security code and in response to the first access code and a valid security code being entered into the communications device the call provision unit is arranged to check that the pre-paid balance associated with that valid security code is greater than zero.

10. A communication system as claimed in claim 9, wherein the call provision unit is arranged to decrement the pre-paid balance by a charge for a call after the termination of the call.

11. A communication system as claimed in claim 9, wherein the call provision unit is arranged to decrement the pre-paid balance by an ongoing charge for the call at intervals during the call.

12. A communication system as claimed in claims 9 and 11, wherein the call provision unit is arranged to generate an audible warning to the user of the first communications device when the pre-paid balance is reduced below a predetermined threshold.

13. A communication system as claimed in any of claims 9, 11 and 12, wherein the call provision unit is arranged to terminate the call when the pre-paid balance is reduced to zero.

14. A communication system as claimed in any preceding claim, wherein in response to a predetermined code being entered into the communications device after a call is initiated by the first access code being entered into the communications device, the network is arranged to charge the initiator of a call at the high charging rate.

15. A communication system substantially as herein described with reference to the accompanying drawings.
